# EUROPEAN PATENT APPLICATION

(11) **EP 1 832 640 A1**
(43) Date of publication of application: **12.09.2007**
(21) Application number: 07004922.6
(22) Date of filing: 09.03.2007
(51) Int. Cl.: C09K 5/04, C08J 9/00, C09K 3/30, C09K 21/08

(54) **Method for generating pollution credits**

(30) Priority: 10.03.2006 US 373426
(71) Applicant: Honeywell International, Inc., Morristown, New Jersey 07962 (US)
(72) Inventor: Luly, Matthew H., Hamburg NY 14075 (US); Singh, Rajiv R., Getzville NY 14075 (US)
(74) Representative: Hucker, Charlotte Jane

(57) **Abstract**

A method for the development or generation of pollution credits by the substitution of lower global warming potential (GWP) mixtures of halogenated hydrocarbons or mixtures of halogenated hydrocarbons with CO₂ for fluorocarbons or fluorocarbon-containing compositions of higher GWP, such as for perfluorocarbon compounds (PFC's), hydrofluorocarbon compounds (HFC's), chlorofluorocarbons (CFC's), hydrochlorofluorocarbon compounds (HCFC's), and compositions thereof, in compositions and processes employing the higher GWP compounds, and receive allocation of pollution credits for such substitution.

## Description

### FIELD OF THE INVENTION

This invention relates to a method for the development or generation of pollution credits by the substitution of lower global warming potential (GWP) mixtures of halogenated hydrocarbons or mixtures of halogenated hydrocarbons with CO₂ for higher GWP fluorocompounds or fluorocarbon-containing compositions, such as fluorocarbon compounds (HFC's), chlorofluorocarbons (CFC's), hydrochlorofluorocarbon compounds (HCFC's), and the like, in compositions and processes employing the higher GWP compounds, and receive allocation of pollution credits for such substitution.

### BACKGROUND OF THE INVENTION

Concern over human impact on climate change prompted a 1997 United Nations conference in Kyoto, Japan. The resulting Kyoto Protocol seeks to stabilize greenhouse gases in the atmosphere "at a level that would prevent dangerous anthropogenic interference with the climate system." An important feature of the Protocol is its use of market-based mechanisms, including emissions trading, which can be used to allow parties to reach their emission targets.

Perfluorocarbon compounds (PFC's), hydrofluorocarbon compounds (HFC's), chlorofluorocarbons (CFC's), hydrochlorofluorocarbon compounds (HCFC's), and their like, have been widely used in a broad variety of industrial, commercial, consumer and public use applications and uses. Recently, concern has increased about potential damage to the earth's atmosphere and climate, and certain perfluorocarbon compounds (PFC's), hydrofluorocarbon compounds (HFC's), chlorofluorocarbons (CFC's), hydrochlorofluorocarbon compounds (HCFC's), and their like, have been identified as particularly problematic in this regard, at least in part because of the greenhouse gas effect and relatively high global warming potentials (GWP) associated with those compounds. In view of the relatively high GWP of these compounds there has been a vigorous search for alternative compounds of lower GWP to replace these compounds of higher GWP in those use, application and compositions to be used in such applications and uses.

The entry into force of the Kyoto Protocol on February 16, 2005 has created a market for GWP credits. Such a market has been created and additional markets are continuing to be created for such GWP credits a adherence to and compliance with the terms of the Kyoto Protocol is expanded. GWP credits are awarded or allocated to entities that take action to reduce pollutant emissions that contribute to global warming. These global warming credits can typically be sold, traded or banked for future use. Thus, there is an economic advantage as well as an environmental advantage to be able to replace higher GWP compounds with compounds of lower GWP in a variety of applications and uses or in compositions intended to be employed in such applications or uses, and such economic advantage can be in he form of GWP credits.

### SUMMARY OF THE INVENTION

In accordance with the invention, a method for generating GWP credits comprises replacing, or using in place of, fluorocompounds or fluorocarbon-containing compositions of higher GWP, a mixture of halogenated hydrocarbons or a mixture of halogenated hydrocarbons with CO₂ wherein the mixtures have a lower GWP, and obtaining an allocation of GWP credit for doing so. In a preferred aspect of the invention the method for generating GWP credits comprises replacing, or using in place of higher GWP fluorocompounds or fluorocarbon-containing compositions, such as fluorohydrocarbon compounds (HFC's), chlorofluorocarbons (CFC's), hydrochlorofluorocarbon compounds (HCFC's), and the like, a mixture of halogenated hydrocarbons or mixture of halogenated hydrocarbons with CO₂ of lower GWP in compositions and processes employing the higher GWP compounds, and receive allocation of pollution credits for such substitution.

In accordance with this invention the replacement of, or use or synthesis in place of, the fluorocarbon compound or fluorocarbon-containing compositions of higher GWP by a mixture of halogenated hydrocarbons or a mixture of halogenated hydrocarbons with CO₂ of lower GWP is in or for a compound or composition to be used in any suitable field, such as, but not limited to, air-conditioning, refrigeration, heat transfer, blowing agent, aerosol or sprayable propellant, gaseous dielectric, cryosurgery, veterinary procedures, dental procedures, fire extinguishing, flame suppression, carriers for flavorings and fragrances, cleaners, air horns, pellet guns, topical anesthetics, and expansion applications. In preferred embodiments of this invention the replacement of, or use in place of, the fluorocarbon compound or composition of higher GWP by a mixture of halogenated hydrocarbons or a mixture of halogenated hydrocarbons with CO₂ of lower GWP is in or for a compound or composition to be used in the fields of refrigeration, blowing agent compositions, and aerosol or sprayable propellants.

In one preferred aspect of this invention the replaced fluorocarbon compound or fluorocarbon-containing compositions of higher GWP is a compound or composition thereof wherein the replaced compound is preferably selected from the group of perfluorocarbon, compounds (PFC's), hydrofluorocarbon compounds (HFC's), chlorofluorocarbons (CFC's), and hydrochlorofluorocarbon compounds (HCFC's).

In another preferred aspect of this invention the mixture of halogenated hydrocarbons or mixture of halogenated hydrocarbons with CO₂ of lower GWP comprises a mixture of azeotrope-like compositions of difluoromethane and trifluoroiodomethane.

In yet another aspect of this invention, the mixture of halogenated hydrocarbons or mixture of halogenated hydrocarbons with CO₂ of lower GWP comprises a mixture of a halogenated hydrocarbon having a GWP of not more than 150 and CO₂.

in still another embodiment of this invention, the mixture of halogenated hydrocarbons or mixture of halogenated hydrocarbons with CO₂ of lower GWP comprises a mixture of a halogenated hydrocarbon having a GWP of not more than 150 and CO₂ wherein the halogenated hydrocarbon having a GWP of not more than 150 is selected from 1, 1,-difluoroethane, fluoroethane, trifluoroiodomethane and mixtures thereof.

### DETAILED DESCRIPTION OF THE INVENTION.

In accordance with the invention, a method for generating GWP credits comprises replacing, or using in place of, fluorocompounds or fluorocarbon-containing compositions of higher GWP, a mixture of halogenated hydrocarbons or a mixture of halogenated hydrocarbons with CO₂ wherein the mixtures have a lower GWP, and obtaining an allocation of GWP credit for doing so. In a preferred aspect of the invention the method for generating GWP credits comprises replacing, or using in place of higher GWP fluorocompounds, such as fluorohydrocarbon compounds (HFC's), chlorofluorocarbons (CFC's), hydrochlorofluorocarbon compounds (HCFC's), and the like, and fluorocarbon-containing compositions thereof, a mixture of halogenated hydrocarbons or mixture of halogenated hydrocarbons with CO₂ of lower GWP in compositions and processes employing the higher GWP compounds, and receive allocation of pollution credits for such substitution.

For the purpose of this invention, "GWP" is defined as the value measured relative to CO₂ and over a 100 year time horizon as defined in "The Scientific Assessment of Ozone Depletion", 2002, a report of the Meteorological Association, Global Ozone Monitoring Project. For the purpose of this invention, "allocation", "allocation" or "generation" of GWP credits is meant to include any system whereby credits are awarded, assigned, designated or otherwise credited by any public or private entity or agency. For the purpose of this invention, by "replacing" or "using in place of" is meant that in any type of end use, in any type of composition of formulation, in any process, in any type system, or in any synthesis manufacturing process, lower global warming potential (GWP) mixtures of halogenated hydrocarbons or mixtures of halogenated hydrocarbons with CO₂ replaces or is used or synthesized in place of a fluorocarbon compound or fluorocarbon-containing composition of higher GWP.

With the method of this invention one can generate GWP credits by replacing, or using in place of, fluorocarbon compounds or fluorocarbon compound-containing compositions of higher GWP, mixtures of halogenated hydrocarbons or mixtures of halogenated hydrocarbons with CO₂ of relatively lower GWP, and obtaining an allocation of GWP credit for doing so, which allocated GWP credits may then be sold, traded or banked for future use, as the holder of the credit desires.

In accordance with this invention the replacement of, or use in place of, the fluorocarbon compound or fluorocarbon-containing composition of higher GWP by the mixtures of halogenated hydrocarbons or mixtures of halogenated hydrocarbons with CO₂ of relatively lower GWP is in a compound or composition to be used in any suitable field, such as, but not limited to, air-conditioning, refrigeration, heat transfer, blowing agent, aerosol or sprayable propellant, gaseous dielectric, cryosurgery, veterinary procedures, dental procedures, fire extinguishing, flame suppression, carriers for flavorings and fragrances, cleaners, air horns, pellet guns, topical anesthetics, and expansion applications. In preferred embodiments of this invention the replacement of, or use in place of, the fluorocarbon compound or fluorocarbon-containing composition of higher GWP by the mixtures of halogenated hydrocarbons or mixtures of halogenated hydrocarbons with CO₂ of relatively lower GWP is in a compound or composition to be used in the fields of refrigeration, blowing agent compositions, and aerosol or sprayable propellants.

In one preferred aspect of this invention the replaced fluorocarbon compound or fluorocarbon-containing composition of higher GWP is a compound or composition thereof wherein the replaced compound is preferably selected from the group of perfluorocarbon compounds (PFC's), hydrofluorocarbon compounds (HFC's), chlorofluorocarbons (CFC's), and hydrochlorofluorocarbon compounds (HCFC's).

In another preferred aspect of this invention the mixture of halogenated hydrocarbons or mixture of halogenated hydrocarbons with CO₂ of lower GWP comprises a mixture of azeotrope-like compositions of difluoromethane and trifluoroiodomethane.

In yet another aspect of this invention, the mixture of halogenated hydrocarbons or mixture of halogenated hydrocarbons with CO₂ of lower GWP comprises a mixture of a halogenated hydrocarbon having a GWP of not more than 150 and CO₂.

In still another embodiment of this invention, the mixture of halogenated hydrocarbons or mixture of halogenated hydrocarbons with CO₂ of lower GWP comprises a mixture of a halogenated hydrocarbon having a GWP of not more than 150 and CO₂ wherein the halogenated hydrocarbon having a GWP of not more than 150 is selected from 1,1,-difluoroethane, fluoroethane, trifluoroiodomethane and mixtures thereof.

As examples of various aspects of this invention there may be mentioned the following non-limiting examples. One aspect of the invention comprises obtaining an allocation of GWP credit for replacing, or using in place of, fluorocarbon compounds or fluorocarbon-containing compositions of higher GWP, an azeotrope-like mixture of difluoromethane and trifluoroiodomethane in refrigerant compositions, refrigeration systems, blowing agent compositions and aerosol propellants, such as in the manner disclosed in US 2005/0233933 A1, which is incorporated herein by reference thereto.

Another aspect of the invention comprises obtaining an allocation of GWP credit for by employing mixture of (a) a halogenated hydrocarbon with a GEP of below 150, and CO₂ in place of a fluorocarbon compound or fluorocarbon-containing compositions of higher GWP, such as for example in place of 1,1,1,2-tetrafluoroethane (R-134a), in refrigerant compositions, refrigeration systems, airconditioning compositions and air-conditioning systems, such as in the manner disclosed in WO 2005/021675 A1

Having described the invention in detail by reference to the preferred embodiments and specific examples thereof, it will be apparent that modifications and variations are possible without departing from the spirit and scope of the disclosure and claims.

## Claims

1. A method for generating global warming potential (GWP) credits comprising (a) replacing, or using in place of, a fluorocarbon compound or fluorocarbon-containing composition of higher GWP, a mixture of halogenated hydrocarbons or a mixture of halogenated hydrocarbons with CO₂ wherein the mixtures have a lower GWP, and (b) obtaining an allocation of GWP warming credit for doing so.

2. A method of claim 1 wherein the halogenated hydrocarbon of the mixture of halogenated hydrocarbons or mixture of halogenated hydrocarbons with CO₂ of lower GWP is a halogenated hydrocarbon of GWP of 150 or less.

3. A method of claim 1 wherein the replaced fluorocarbon compound or fluorocarbon containing-composition of higher GWP is a compound or composition thereof wherein the replaced compound is selected from the group consisting of perfluorocarbon compounds (PFC's), hydrofluorocarbon compounds (HFC's), chlorofluorocarbons (CFC's), and hydrochlorofluorocarbon compounds (HCFC's).

4. A method of claim 2 wherein the replaced fluorocarbon compound or fluorocarbon-containing composition of higher GWP is a compound or composition thereof wherein the replaced compound is selected from the group consisting of perfluorocarbon compounds (PFC's), hydrofluorocarbon compounds (HFC's), chlorofluorocarbons (CFC's), and hydrochlorofluorocarbon compounds (HCFC's).

5. A method according to claim 3 wherein the replacement of the fluorocarbon compound or fluorocarbon-containing composition of higher GWP by mixture of halogenated hydrocarbons or a mixture of halogenated hydrocarbons with CO₂ is in a compound or composition to be used in a field selected from air-conditioning, refrigeration, heat transfer, blowing agent, aerosol or sprayable propellant, gaseous dielectric, cryosurgery, veterinary procedures, dental procedures, fire extinguishing, flame suppression, carriers for flavorings and fragrances, cleaners, air horns, pellet guns, topical anesthetics, and expansion applications.

6. A method according to claim 5 wherein the replacement of the fluorocarbon compound or fluorocarbon-containing composition of higher GWP by the mixture of halogenated hydrocarbons or a mixture of halogenated hydrocarbons with CO₂ in a refrigeration composition or refrigeration use.

7. A method according to claim 5 wherein the replacement of the fluorocarbon compound or fluorocarbon-containing composition of higher GWP by mixture of halogenated hydrocarbons or a mixture of halogenated hydrocarbons with CO₂ is in a blowing agent composition.

8. A method according to claim 5 wherein the replacement of the fluorocarbon compound or fluorocarbon-containing composition of higher GWP by mixture of halogenated hydrocarbons or a mixture of halogenated hydrocarbons with CO₂ is in a aerosol or sprayable propellant.

9. A method according to claim 5 wherein the mixture of halogenated hydrocarbons or mixture of halogenated hydrocarbons with CO₂ of lower GWP comprises a mixture of an azeotrope-like composition of difluoromethane and trifluoroiodomethane.

10. A method according to claim 1 wherein the mixture of halogenated hydrocarbons or mixture of halogenated hydrocarbons with CO₂ of lower GWP comprises a mixture of a halogenated hydrocarbon having a GWP of not more than 150 and CO₂ and wherein the halogenated hydrocarbon having a GWP of not more than 150 is selected from 1,1,-difluoroethane, fluoroethane, trifluoroiodomethane, and mixtures thereof.
